# EUROPÄISCHE PATENTANMELDUNG

(11) **EP 0 908 884 A2**
(43) Veröffentlichungstag der Anmeldung: **14.04.1999**
(21) Anmeldenummer: 98112370.6
(22) Anmeldetag: 04.07.1998
(51) Int. Cl.: G11B 27/10, G11B 19/02, G11B 27/11, G11B 31/00

(54) **Autoradio**

(30) Priorität: 11.10.1997 DE 19745022
(71) Anmelder: ROBERT BOSCH GMBH, 70442 Stuttgart (DE)
(72) Erfinder: Wall, Holger, 30459 Hannover (DE)

(57) **Zusammenfassung**

Es wird ein Autoradio (1) mit einem elektronischen Speicher (5) vorgeschlagen, das zur Programmierung von Titeln mindestens einer Speicherplatte, insbesondere einer Compact-Disc dient. Dabei ist eine erste Bedienfunktion vorgesehen, deren Aktivierung im Speicher (5) eine Kennzeichnung aller Titel der in ein Plattenlaufwerk (10) eingelegten Speicherplatte als abzuspielende Titel zur Folge hat. Weiterhin ist eine zweite Bedienfunktion vorgesehen, deren Aktivierung im Speicher (5) eine Kennzeichnung eines aktuell abgespielten Titels der in das Plattenlaufwerk (10) eingelegten Speicherplatte als nicht abzuspielender Titel zur Folge hat.

## Beschreibung

### Stand der Technik

Die Erfindung geht von einem Autoradio nach der Gattung des Hauptanspruchs aus.

Aus dem Blaupunktkatalog "Sound- und Fahrvergnügen pur. Mobile Kommunikation von Blaupunkt. Pogramm '96/'97" ist bereits ein elektronischer Speicher zur Programmierung der Wunschtitel von Compact-Discs bekannt. Ein solcher elektronischer Speicher ist beispielsweise im Blaupunkt-Autoradio "München RDM 126" realisiert.

### Vorteile der Erfindung

Das erfindungsgemäße Autoradio mit den Merkmalen des Hauptanspruchs hat demgegenüber den Vorteil, daß eine umfangreiche Abspielliste auf einfache und wenig Bedienaufwand erfordernde Weise erstellt und im Speicher abspeicherbar ist. Auf diese Weise wird der Bedienkomfort für den Benutzer erhöht und der Bedienvorgang zur Abspeicherung aller Titel im Speicher beschleunigt, so daß nicht mehr jeder Titel separat abgespeichert werden muß. Dadurch wird außerdem die Verkehrssicherheit erhöht, da der Benutzer weniger vom Straßenverkehr abgelenkt wird.

Durch die in den Unteransprüchen aufgeführten Maßnahmen sind vorteilhafte Weiterbildungen und Verbesserungen des im Hauptanspruch angegebenen Autoradios möglich.

Vorteilhaft ist dabei, daß eine zweite Bedienfunktion vorgesehen ist, deren Aktivierung im Speicher eine Kennzeichnung eines aktuell abgespielten Titels der in das Plattenlaufwerk eingelegten Speicherplatte als nicht abzuspielender Titel zur Folge hat. Auf diese Weise wird die Bedienung für den Benutzer für den Fall vereinfacht, daß die Mehrzahl der Titel auf der Speicherplatte abgespielt werden sollen, so daß nur eine relativ geringe Zahl von Bedienvorgängen erforderlich ist, um die nicht gewünschten Titel auf der Speicherplatte von der Abspielliste im Speicher zu entfernen.

Ein weiterer Vorteil besteht darin, daß eine dritte Bedienfunktion vorgesehen ist, deren Aktivierung im Speicher eine Kennzeichnung aller Titel der in das Plattenlaufwerk eingelegten Speicherplatte als nicht abzuspielende Titel mit Ausnahme eines aktuell abgespielten Titels zur Folge hat. Auf diese Weise wird die Bedienung für den Benutzer für den Fall vereinfacht, daß die Mehrzahl der Titel auf der Speicherplatte nicht abgespielt werden soll, so daß nur eine vergleichsweise geringe Zahl gewünschter Titel in die Abspielliste im Speicher eingegeben werden muß.

Ein weiterer Vorteil besteht darin, daß genau ein Bedienelement vorgesehen ist, durch dessen Betätigung mindestens zwei der Bedienfunktionen aktivierbar sind, wobei eine Auswahl einer Bedienfunktion in Abhängigkeit der Betätigungsdauer des Bedienelementes erfolgt. Auf diese Weise wird Platz an der Bedienfront des Autoradios eingespart und die Übersichtlichkeit für den Benutzer erhöht. Außerdem werden durch Verwendung nur eines Bedienelementes für mehrere Bedienfunktionen Materialkosten für weitere Bedienelemente eingespart und der Herstellungsaufwand verringert.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Autoradios, Figur 2 ein Beispiel für in einem elektronischen Speicher des Autoradios abgespeicherte Abspiellisten für Compact-Discs und Figur 3 einen Ablaufplan für die Aktivierung verschiedener Bedienfunktionen beim Autoradio.

### Beschreibung des Ausführungsbeispiels

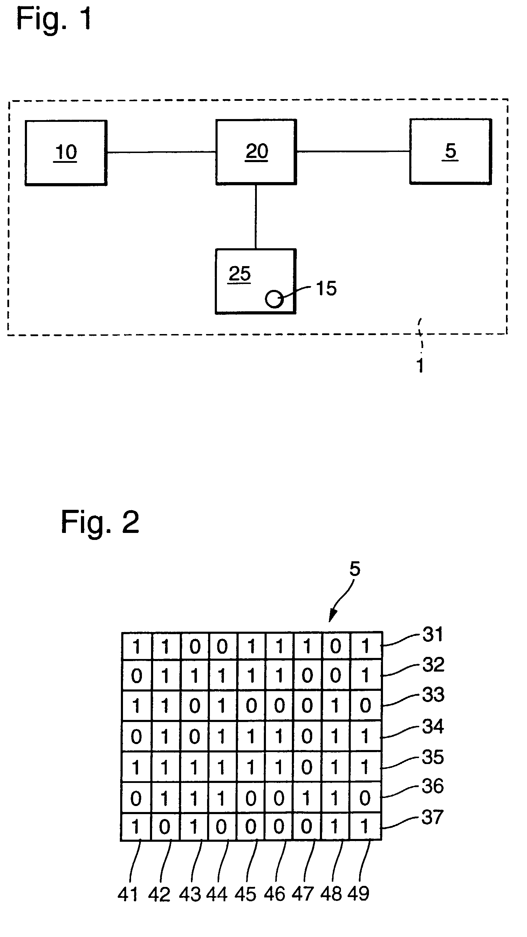

In Figur 1 kennzeichnet 1 ein Autoradio, das einen elektronischen Speicher 5, ein Plattenlaufwerk 10, eine Auswerteeinheit 20 und eine Eingabeeinheit 25 umfaßt. Weitere, für die Erfindung nicht wesentliche Baugruppen des Autoradios 1 sind in Figur 1 nicht dargestellt. Der Speicher 5, das Plattenlaufwerk 10 und die Eingabeeinheit 25 sind jeweils mit der Auswerteeinheit 20 verbunden. Die Eingabeeinheit 25 umfaßt mindestens ein Bedienelement 15, das beispielsweise als Tastschalter ausgebildet sein kann. Das Plattenlaufwerk 10 kann auch außerhalb des Autoradios 1 angeordnet sein und beispielsweise über ein Verbindungskabel an die Auswerteeinheit 20 angeschlossen sein. Dabei kann es sich beim Plattenlaufwerk 10 um einen Compact-Disc-Spieler handeln, dem auch ein Compact-Disc-Wechsler zugeordnet sein kann. Es sind jedoch auch Plattenlaufwerke für beliebige andere Speicherplatten magnetischer und/oder optischer Art zur Realisierung des erfindungsgemäßen Autoradios möglich, beispielsweise auch für CD-ROM's, digitale Video-Discs, sogenannte Mini-Discs oder dergleichen.

Der Speicher 5 kann als EE-PROM ausgebildet sein und ermöglicht die Speicherung sog. Abspiellisten 31,...,37 für jeweils eine in diesem Ausführungsbeispiel als Compact-Disc ausgebildete Speicherplatte gemäß Figur 2. In Figur 2 ist der Speicher 5 mit 7 Abspiellisten 31,...,37 dargestellt, der die Möglichkeit bietet, für sieben Compact-Discs jeweils eine Abspielliste abzuspeichern. Gemäß dem Beispiel nach Figur 2 umfaßt dabei jede Abspielliste neun Speicherplätze 41, ...,49 für Compact-Discs mit bis zu neun Titeln. Für Compact-Discs mit mehr als neun Titeln sind entsprechend mehr als neun Speicherplätze pro Abspielliste im Speicher 5 vorzusehen. Weist eine Compact-Disc weniger als neun Titel auf, so bleiben in der entsprechenden Abspielliste des Speichers 5 nicht benötigte Speicherplätze frei oder sie werden für andere Abspiellisten genutzt. Der erste Speicherplatz 41 entspricht dabei beispielsweise jeweils dem ersten Titel der entsprechenden Compact-Disc, der zweite Speicherplatz entspricht beispielsweise dem zweiten Titel der entsprechenden Compact-Disc, u.s.w..

Im Beispiel nach Figur 2 ist ein abzuspielender Titel durch eine Eins auf dem entsprechenden Speicherplatz und ein nicht abzuspielender Titel durch eine Null auf dem entsprechenden Speicherplatz digital durch jeweils ein Bit gekennzeichnet. So ist beispielsweise gemäß der ersten Abspielliste 31 von der zugehörigen Compact-Disc der erste, der zweite, der fünfte, der sechste, der siebte und der neunte Titel abzuspielen. Die restlichen Titel dieser Compact-Disc sollen dabei nicht abgespielt werden. Die gemäß einer Abspielliste abzuspielenden Titel werden dann nach Einlegen der zugehörigen Compact-Disc in das Plattenlaufwerk 10 in einem dafür vorgesehenen ersten Betriebsmodus in ihrer Reihenfolge nacheinander abgespielt. In einem zweiten Betriebsmodus bleiben die Abspiellisten des Speiches 5 unberücksichtigt und es wird jeder Titel der entsprechenden Compact-Disc abgespielt. Soll für eine in das Plattenlaufwerk 10 eingelegte Compact-Disc eine Abspielliste im Speicher 5 angelegt werden, so wird die ermittelte Gesamtspielzeit und Titelanzahl der Compact-Disc in einem in figur 1 nicht dargestellten Speicherbereich abgespeichert und mit den im Speicher 5 zur Verfügung gestellten Speicherplätzen für die zu erstellende Abspielliste verknüpft. Auf diese Weise laßt sich die Compact-Disc nach Entnahme aus dem Plattenlaufwerk 10, späterem Wiedereinlegen in das Plattenlaufwerk 10, erneuter Ermittlung der Gesamtspielzeit und Titelanzahl und entsprechendem Vergleich mit den im weiteren, im nicht dargestellten Speicherbereich abgelegten Daten der zugehörigen Abspielliste zuordnen, so daß die für diese Compact-Disc ausgewählten Titel abgespielt werden. Die Ermittlung der Gesamtspielzeit und der Titelanzahl einer in das Plattenlaufwerk 10 eingelegten Compact-Disc und der Vergleich mit weiteren, nicht dargestellten Speicherbereich abgelegten Daten erfolgt dabei in der Auswerteeinheit 20 in einer dem Fachmann bekannten Weise. Das Abspielen oder Unterdrücken von einzelnen Titeln auf einer in das Plattenlaufwerk 10 eingelegten Compact-Disc wird ebenfalls von der Auswerteeinheit 20 in Abhängigkeit der im Speicher 5 abgespeicherten zugehörigen Abspielliste veranlaßt. Der erste Betriebsmodus, in dem nur die Titel einer in das Plattenlaufwerk 10 eingelegten Compact-Disc abgespielt werden, die auch gemäß der zugehörigen Abspielliste im Speicher 5 zum Abspielen ausgewählt wurden und dort durch eine Eins gekennzeichnet sind, läßt sich nur dann einstellen, wenn für die in das Plattenlaufwerk 10 eingelegte Compact-Disc auch eine zugehörigen Abspielliste im Speicher 5 ermittelt wurde. Wird keine zugehörige Abspielliste im Speicher 5 ermittelt, so wird automatisch von der Auswerteeinheit 20 der zweite Betriebsmodus eingestellt, in dem alle Titel der Compact-Disc der Reihe nach abgespielt werden.

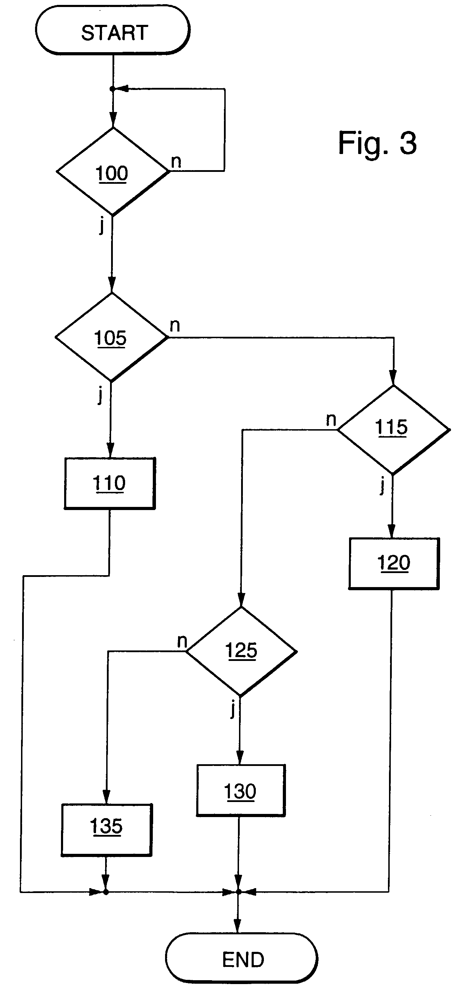

In Figur 3 ist ein Ablaufplan für die Funktionsweise der Auswerteeinheit 20 dargestellt. Bei einem Programmpunkt 100 wird dabei geprüft, ob das Bedienelement 15 gedrückt wurde. Ist dies der Fall, so wird zu Programmpunkt 105 verzweigt, andernfalls wird zu Programmpunkt 100 zurückverzweigt. Bei Programmpunkt 105 wird geprüft, ob die Betätigungsdauer bei der Betätigung des Bedienelementes 15 unter einem ersten vorgegebenen Wert von beispielsweise 2 Sekunden lag. Ist dies der Fall, so wird zu Programmpunkt 110 verzweigt, andernfalls wird zu Programmpunkt 115 verzweigt. Bei Programmpunkt 110 wird der erste Betriebsmodus von der Auswerteeinheit 20 eingestellt. Anschließend wird der Programmteil verlassen. Bei Programmpunkt 115 wird geprüft, ob die Betätigungdsauer bei der Betätigung des Bedienelementes 15 einen zweiten vorgegebenen Wert von beispielsweise 4 Sekunden unterschreitet. Ist dies der Fall, so wird zu Programmpunkt 120 verzweigt, andernfalls wird zu Programmpunkt 125 verzweigt. Bei Programmpunkt 120 wird eine erste Bedienfunktion aktiviert, die in der zugehörigen Abspielliste im Speicher 5 eine Kennzeichnung aller Titel der in das Plattenlaufwerk 10 eingelegten Compact-Disc als abzuspielende Titel bewirkt, so daß auf den entsprechenden Speicherplätzen jeweils eine logische Eins steht. Für den Fall, daß zu der in das Plattenlaufwerk 10 eingelegten Compact-Disc noch keine Abspielliste im Speicher 5 besteht, wird eine neue Abspielliste angelegt, sofern noch Speicherplatz im Speicher 5 vorhanden ist. Andernfalls wird an einer in Figur 1 nicht dargestellten Anzeigevorrichtung von der Auswerteeinrichtung 20 eine Anzeige veranlaßt, die den Benutzer darüber informiert, daß der Speicher voll ist. Für den Fall, daß für die eingelegte Compact-Disc bereits eine Abspielliste im Speicher 5 existiert, werden die Speicherplätze für die Titel der eingelegten Compact-Disc jeweils mit einer logischen Eins überschrieben, falls sie nicht bereits durch eine Eins gekennzeichnet sind. Nach Programmpunkt 120 wird der Programmteil verlassen. Bei Programmpunkt 125 wird geprüft, ob die Betätigungsdauer bei der Betätigung des Bedienelementes 15 einen dritten vorgegebenen Wert von beispielsweise 6 Sekunden unterschreitet. Ist dies der Fall, so wird zu Programmpunkt 130 verzweigt, andernfalls wird zu Programmpunkt 135 verzweigt. Bei Programmpunkt 130 wird eine zweite Bedienfunktion von der Auswerteeinheit 20 aktiviert, die im Speicher 5 eine Kennzeichnung eines aktuell abgespielten Titels der in das Plattenlaufwerk 10 eingelegten Compact-Disc als nicht abzuspielender Titel bewirkt, wobei der entsprechende Speicherplatz der zugehörigen Abspielliste mit einer logischen Null gekennzeichnet wird. Dies ist jedoch nur für den Fall möglich, daß für die eingelegte Compact-Disc eine Abspielliste im Speicher 5 vorliegt.

Andernfalls bleibt die Betätigung des Bedienelementes 15 wirkungslos, was gegebenenfalls ebenfalls durch eine entsprechende Anzeige an der in Figur 1 nicht dargestellten Anzeigevorrichtung zur Information des Benutzers dargestellt werden kann. Nach Programmpunkt 130 wird der Programmteil verlassen. Bei Programmpunkt 135 wird eine dritte Bedienfunktion aktiviert, die im Speicher 5 eine Kennzeichnung aller Titel der in das Plattenlaufwerk 10 eingelegten Compact-Disc als nicht abzuspielende Titel mit Ausnahme eines aktuell abgespielten Titels bewirkt. Der aktuell abgespielte Titel wird dabei auf dem entsprechenden Speicherplatz der zugehörigen Abspielliste mit einer logischen Eins gekennzeichnet, die restlichen Titel der zugehörigen Abspielliste werden auf den entsprechenden Speicherplätzen jeweils mit einer logischen Null gekennzeichnet. Die Aktivierung der dritten Bedienfunktion ist dabei ebenfalls nur dann möglich, wenn für die in das Plattenlaufwerk 10 eingelegte Compact-Disc eine Abspielliste im Speicher 5 vorgesehen ist. Andernfalls bleibt die Bedienung des Bedienelementes 15 ohne Wirkung. Dies kann dem Benutzer ebenfalls an der in Figur 1 nicht dargestellten Anzeigevorrichtung mitgeteilt werden. Dabei kann in allen beschriebenen Fällen, in denen zu einer in das Plattenlaufwerk 10 eingelegten Compact-Disc keine Abspielliste im Speicher 5 vorhanden ist, jedoch noch Speicherplatz zum Anlegen einer neuen Abspielliste im Speicher 5 vorhanden ist, automatisch eine neue Abspielliste zu der gerade eingelegten Compact-Disc angelegt werden und in dem in Figur 1 nicht dargestellten weiteren Speicherbereich für eine spätere Verknüpfung der gerade in das Plattenlaufwerk 10 eingelegten Compact-Disc mit der zugehörigen Abspielliste im Speicher 5 die Gesamtspielzeit und die Titelanzahl dieser Compact-Disc abgespeichert werden. Die Abspielliste wird dann bei diesem Initialisierungsvorgang mit den Titelkennzeichnungen versehen, die gemäß der gewählten Bedienfunktion vorgesehen sind, wobei bei der zweiten Bedienfunktion nur der aktuell abgespielte Titel als nicht abzuspielender Titel gekennzeichnet wird und die restlichen Titel beispielsweise beliebig gekennzeichnet sind. Nach Programmpunkt 135 wird der Programmteil ebenfalls verlassen.

Zusätzlich zu den beschriebenen Bedienfunktionen können mittels des Bedienelementes 15 und weiteren vorgegebenen Betätigungsdauern auch noch weitere Bedienfunktionen realisiert werden. Dabei könnte eine vierte Bedienfunktion vorgesehen sein, deren Aktivierung im Speicher 5 eine Kennzeichnung eines aktuell abgespielten Titels der in das Plattenlaufwerk 10 eingelegten Compact-Disc als abzuspielender Titel bewirkt und den entsprechenden Speicherplatz der zugehörigen Abspielliste im Speicher 5 mit einer logischen Eins kennzeichnet. Weiterhin könnte eine fünfte Bedienfunktion vorgesehen sein, deren Aktivierung eine Löschung der der gerade eingelegten Compact-Disc zugeordneten Abspielliste im Speicher 5 zur Folge hat. Es könnte außerdem eine sechste Bedienfunktion vorgesehen sein, deren Aktivierung im Speicher 5 eine Löschung sämtlicher Abspiellisten zur Folge hat. Für den Fall, daß bei Aktivierung der vierten Bedienfunktion im Speicher 5 keine Abspielliste der gerade im Plattenlaufwerk 10 eingelegten Compact-Disc zugeordnet ist, erfolgt keine Aktion bzw. gegebenenfalls eine entsprechende Anzeige an der in Figur 1 nicht dargestellten Anzeigevorrichtung zur Information des Benutzers. Außerdem könnte, wie bereits beschrieben, bei noch vorhandener ausreichender Speicherkapazität im Speicher 5 eine neue Abspielliste für die gerade in das Plattenlaufwerk 10 eingelegte Compact-Disc angelegt werden, wobei der Speicherplatz des aktuell abgespielten Titels mit einer logischen Eins gekennzeichnet würde und die restlichen Speicherplätze der Abspielliste beispielsweise beliebig gekennzeichnet sind.

Eine Aktivierung der verschiedenen Bedienfunktionen kann auch mittels mehreren Bedienelementen an der Eingabeinheit 25 des Autoradios 1 realisiert werden, wobei bei Verwendung jeweils eines Bedienelementes pro Bedienfunktion eine Auswahl einer Bedienfunktion nicht mehr in Abhängigkeit der Betätigungsdauer des jeweiligen Bedienelementes erfolgen muß. Für die Löschung von Abspiellisten kann auch eine eigene Löschtaste vorgesehen sein, wobei je nach Betätigungsdauer entweder eine aktuelle Abspielliste oder alle Abspiellisten aus dem Speicher 5 gelöscht werden könnten. Beim Löschen einer oder mehrerer Abspiellisten wird auch die jeweils zugehörige Gesamtspielzeit und Titelanzahl im weiteren, nicht in Figur 1 dargestellten Speicherbereich gelöscht und somit die Zuordnung zur in das Plattenlaufwerk 10 einlegbaren Compact-Disc abgebrochen. Bei der Verteilung der Bedienfunktionen auf ein oder mehrere Bedienelemente, gegebenfalls unter Ausnutzung verschiedener Betätigungsdauern, kann der Fachmann je nach Anforderung auswählen.

## Patentansprüche

1. Autoradio (1) mit einem elektronischen Speicher (5) zur Programmierung von Titeln mindestens einer Speicherplatte, insbesondere einer Compact-Disc, dadurch gekennzeichnet, daß eine erste Bedienfunktion vorgesehen ist, deren Aktivierung im Speicher (5) eine Kennzeichnung aller Titel der in ein Plattenlaufwerk (10) eingelegten Speicherplatte als abzuspielende Titel zur Folge hat.

2. Autoradio (1) nach Anspruch 1, dadurch gekennzeichnet, daß eine zweite Bedienfunktion vorgesehen ist, deren Aktivierung im Speicher (5) eine Kennzeichnung eines aktuell abgespielten Titels der in das Plattenlaufwerk (10) eingelegten Speicherplatte als nicht abzuspielender Titel zur Folge hat.

3. Autoradio (1) nach Anspruch 1 oder 2, dadurch gekennzeichnet, daß eine dritte Bedienfunktion vorgesehen ist, deren Aktivierung im Speicher (5) eine Kennzeichnung aller Titel der in das Plattenlaufwerk (10) eingelegten Speicherplatte als nicht abzuspielende Titel mit Ausnahme eines aktuell abgespielten Titels zur Folge hat.

4. Autoradio (1) nach Anspruch 1, 2 oder 3, dadurch gekennzeichnet, daß genau ein Bedienelement (15) vorgesehen ist, durch dessen Betätigung mindestens zwei der Bedienfunktionen aktivierbar sind, wobei eine Auswahl einer Bedienfunktion in Abhängigkeit der Betätigungsdauer des Bedienelementes (15) erfolgt.
